## Europäisches Patentamt
## European Patent Office
## Office européen des brevets

(11) Veröffentlichungsnummer: **0 185 208**
**B1**

(12) # EUROPÄISCHE PATENTSCHRIFT

(45) Veröffentlichungstag der Patentschrift:
04.11.87

(51) Int. Cl.⁴: **B 60 T 17/08,** B 61 H 1/00

(21) Anmeldenummer: 85114636.5

(22) Anmeldetag: 18.11.85

(54) Bremseinheit für Schienenfahrzeuge.

(30) Priorität: 20.12.84 DE 3446599

(43) Veröffentlichungstag der Anmeldung:
25.06.86 Patentblatt 86/26

(45) Bekanntmachung des Hinweises auf die Patenterteilung:
04.11.87 Patentblatt 87/45

(84) Benannte Vertragsstaaten:
CH DE FR LI SE

(56) Entgegenhaltungen:
EP-A-0 081 467
WO-A-80/00605
DE-A-2 730 959
FR-A-2 376 339
US-A-1 760 624

(73) Patentinhaber: KNORR- BREMSE AG, Moosacher Strasse 80 Postfach 401060, D-8000 München 40 (DE)

(72) Erfinder: Statlmeir, Josef, Knorrstrasse 83, D-8000 München 40 (DE)
Erfinder: Wosegien, Bernd, Angerweg 8, D-8000 München 83 (DE)

## Beschreibung

Die Erfindung betrifft eine Bremseinheit für Schienenfahrzeuge, mit einem über ein Keilgetriebe mit einer Druckstange gekoppelten Bremszylinder, wobei die Achsen von Druckstange und Bremszylinder wenigstens annähernd im rechten Winkel zueinander verlaufen und wobei das Keilgetriebe eine vom Bremszylinderkolben bewegbare Rollenvorrichtung aufweist, die zwischen eine wenigstens annähernd parallel zur Achse des Bremszylinders verlaufende, gehäusefeste Abstützfläche und eine an einem Übersetzungshebel angeordnete Keilfläche abrollbar angreift, wobei der im wesentlicben quer zur Druckstange verlaufende Übersetzungshebel in seinem mittleren Bereich an der Druckstange angelenkt ist, ausgehend etwa von seinem mittleren Bereich bis in seinen einen Endbereich die Keilfläche trägt und nahe seines anderen Endbereiches am Gehäuse der Bremseinheit schwenkbar gelagert ist.

Eine derartige Bremseinheit ist aus der DE-C-26 59 768 bekannt. Der Übersetzungshebel ist dabei an seinem dem Bremszylinder abgewandten Endbereich am Gehäuse gelagert, während sich die Keilfläche am dem Bremszylinder zugewandten Bereich des Übersetzungshebels befindet. Zusätzlich kann noch ein drehbar im Gehäuse gelagerten Handbremshebel vorgesehen sein, dessen freies Ende mit der Rollenvorrichtung in Wirkrichtung des Bremszylinders zusammenwirken kann. Das aus dem Gehäuse ins Freie ragende Ende der Drucksranke ist an einem Bremsklotz und an einem Pendelhebel angelenkt, der Pendelbebel erstreckt sich im wesentlichen aufwärts und ist mit seinem oberen Ende an einem gehäusefesten Tragarm gelagert. Bei dieser bekannten Bremseinheit ist es vorteilhaft, daß der Bremszylinderkolben während Bremsungen durch die Führung der Rollenvorrichtung an der festen Abstützfläche keinerlei Kippbewegungen ausführt, wodurch auch unter ungünstigen Temperaturbedingungen die Dichtigkeit des Bremszylinderkolbens gewährleistbar ist. Weiterhin ist die Druckstange sowohl am Übersetzungshebel wie am Pendelhebel drehbar aufgehängt, sie ist damit reibungsarm geführt und wird auch während Bremsungen nur von Druckkräften, nicht aber von Biegemomenten belastet. Durch Fehlen jeglicher Biegemomentbelastung ist ein gegebenenfalls in die Druckstange integrierbarer Nachstellmechanismus baulich und funktionell günstig ausgestaltbar. Es ist jedoch nachteilig, daß im Lösezustand die Rollenvorrichtung am der Gehäuselagerung abgewandten Ende des Übersetzungshebels mit der Keilfläche zusammenwirkt und daß sich während Bremsungen mit zunehmendem Hub die Angriffstelle der Rollenvorrichtung in Richtung zum mittleren Bereich des Übersetzungshebels verlagert; der Übersetzungshebel weist somit, bezogen auf die Länken seiner Hebelabschnitte, bei im Lösezustand befindlicher Bremseinheit sein größtes Übersetzungsverhältnis auf, obwohl hierbei keinerlei Bremskraftausübung erforderlich ist, und das Übersetzungsverhältnis sinkt während Bremsungen mit zunehmendem Bremshub, obwohl hierbei steigende Bremszuspannkräfte erforderlich werden. Die Tatsache, daß die Keilfläche durch entsprechende Gestaltung diese ungünstige Übersetzungsverhältnis-Änderung mit dem Bremshub entgegenwirken kann, vermag diesen Mangel nicht zu beheben, sie führt insbesondere zu Bremsbeginn zu ungünstigen Aufteilungen der vom Bremszylinder ausübbaren Kraft und damit zu einem schlechten Wirkungsgrad. Auch ergeben sich durch die erwähnten Übersetzungsverhältnis-Änderungen hohe Belastungen für die Rollenvorrichtung und die Lagerungen des Bremshebels.

Aus der US-A-1 760 624 ist eine durch Vakuum betätigbare Bremseinheit bekannt, bei welcher der Bremszylinderkolben über eine Zugstange mit einem Ende eines Übersetzungshebels gelenkig gekoppelt ist. Das andere Ende des Übersetzungshebels ist am Gehäuse gelagert. Zwischen diesen Lagerungen weist der Übersetzungshebel in seinem mittleren Bereich eine dem Bremszylinderkolben zugewandte Keilfläche auf, an welcher eine Rolle abrollbar ist, die drehbar am Ende einer parallel neben dem Bremszylinder verschieblich angeordneten Druckstanke gelagert ist. Bei dieser Bremseinheit ändert sich zwar mit zunehmendem Bremshub das längenbedingte Übersetzungsverhältnis des Übersetzungshebels in gewünschter Weise derart, daß mit zunehmendem Bremshub das Übersetzungsverhältnis steigt und damit größere Druckkräfte auf die Druckstange ausübbar sind, es ergeben sich jedoch zugleich hohe Biegemomentbelastungen für die Druckstange und Kipp- und Seitenkraftkomponenten für den Bremszylinderkolben mit ihren nachteiligen Folgen.

Es ist Aufgabe der Erfindung, eine Bremseinheit der eingangs angegebenen Art derart auszugestalten, daß sie die Vorteile der bekannten Bremseinheiten vereinigt, jedoch nicht die Mängel der bekannten Bremseinheiten aufweist. Insbesondere soll die Bremseinheit bei einfachem Aufbau einen bei Bremsungen lineare, kippfreie Bewegungen ausführenden Bremszylinderkolben aufweisen, der von keinen Seiten- oder Kippkraftmomenten belastet ist. Das längenbedingte Übersetzungsverhältnis am Übersetzungshebel soll sich mit wachsendem Bremshub und damit wachsenden Bremskräften keinesfalls verkleinern, sondern vergrößern, wodurch die Belastungen für die Rollenvorrichtung und die Übersetzungshebellagerunken relativ gering gehalten werden können, und die Druckstange soll rein pendelig aufbängbar sein, so daß keine Quer- oder Biegekräfte auf sie ausgeübt werden können.

Diese Aufgabe wird nach der Erfindung durch die im kennzeichnenden Teil des Patentanspruchs 1 angegebenen Merkmale gelöst. Infolge dieser Anordnung greift bei im Lösezustand befindlicher Bremseinheit die Rollenvorrichtung an der Keilfläche etwa im mittleren Bereich des Übersetzungshebels an, wodurch sich infolge der Längenverhältnisse am Übersetzungshebel ein niedriges Übersetzungsverhältnis ergibt. Während Bremsungen mit anwachsendem Bremshub verlagert sich die Angriffsstelle der Rollenvorrichtung am Übersetzungshebel zu dessen dem Bremszylinder abgewandten Endbereich hin, wodurch sich das längenbedingte Übersetzungsverhältnis des Übersetzungshebels in gewünschter Weise vergrößert; die Belastungen. insbesondere für die Rollenvorrichtung, bleiben infolge dieses sich steigernden Übersetzungsverhältnisses auch bei anwachsenden Bremskräften relativ gering.

Die Unteransprüche geben nach der weiteren Erfindung vorteilhafte Ausgestaltungsmöglichkeiten für eine gemäß den vorstehend angegebenen Merkmalen ausgebildete Bremseinheit an.

In der Zeichnung ist ein Ausführungsbeispiel für eine nach der Erfindung ausgebildete Bremseinheit dargestellt und zwar zeigt

Fig. 1 einen Vertikalschnitt durch die Bremseinheit und

Fig. 2 ober- und unterhalb der Mittelachse zwei unterschiedliche Querschnitte durch die Bremseinheit.

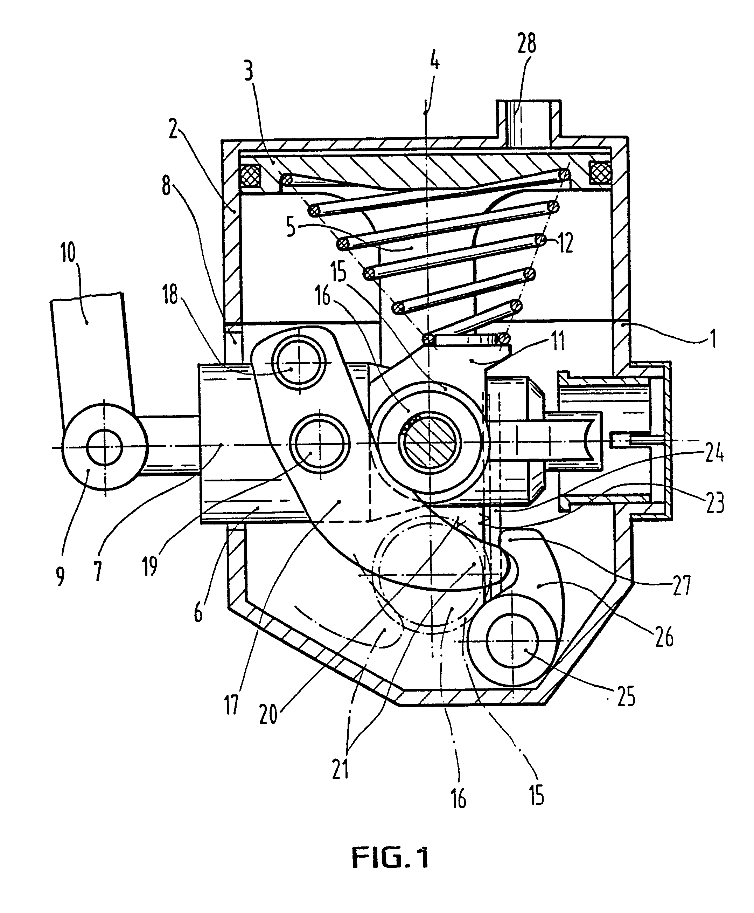

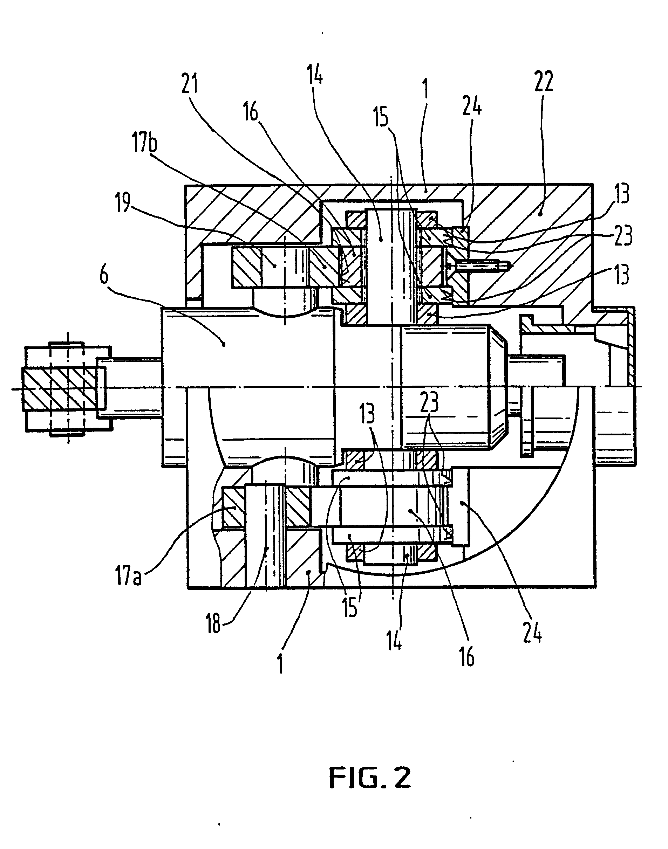

Ein Gehäuse 1 der Bremseinheit ist in seinem oberen Abschnitt zu einem Bremszylinder 2 ausgebildet, in welchem abgedichtet verschieblich ein Bremszylinderkolben 3 geführt ist; die Achse 4 des Bremszylinders 2 verläuft etwa vertikal. Der Bremszylinderkolben 3 trägt einen abwärts ragenden Stößel 5, der in zwei seitlich zueinander versetzt angeordnete Einzelstößel aufgegliedert ist, derart, daß der Stößel 5 als gegabelt oder doppelt ausgeführt angesehen werden kann. Die Einzelstößel des Stößels 5 umgreifen seitlich eine unterhalb des Bremszylinders 2 angeordnete Druckstange 6, deren Achse 7 etwa waagrecht verläuft. In die Druckstange 6 kann ein üblicher, in seinem Aufbau und seiner Wirkungsweise nicht weiter interessierender Gestängenachsteller integriert sein. Die Druckstange 6 endet einerseits innerhalb des Gehäuses 1, während sie andererseits durch eine Öffnung 8 aus dem Gehäuse 1 ins Freie ragt und mit einem Auge 9 endet, an welchem ein nicht dargestellter Bremsklotz und ein Pendelhebel 10 angelenkt sind. Der Pendelhebel 10 erstreckt sich im wesentlichen aufwärts und ist in nicht dargestellter Weise an einem festen Widerlager, beispielsweise entsprechend der bereits erwähnten DE-C-26 59 768 an einem gehäusefesten Tragarm, angelenkt. An einem gehäusefesten Stützlager 11 liegt eine Kolbenrückdruckfeder 12 für den Bremszylinderkolben 3 auf. Die unteren Enden der Einzelstößel des Stößels 5 sind nochmals gegabelt ausgebildet, zwischen den Gabelenden 13 erstreckt sich, wie aus Fig. 2 ersichtlich, jeweils ein Rollenlagerbolzen 14. Zwischen den Gabelenden 13 sind auf den Rollenlagerbolzen 14 jeweils zwei Rollen 15 drehbar gelagert, zwischen welchen eine im Durchmesser etwas kleinere Rolle 16 unabhängig drehbar gelagert ist. Seitlich der Druckstange 6 befindet sich im Gehäuse 1 ein Übersetzuhgshebel 17, der gemäß Fig.2 in zwei die Druckstange 1 zwischen sich einschließende, zueinander parallele Übersetzungseinzelhebel 17a und 17b aufgegliedert ist. Der Übersetzungshebel 17 ist im Bereich zwischen der Achse 7, genauer einer die Achse beinhaltenden Querebene, und dem Bremszylinder 2 mittels Bolzen 18 drehbar am Gehäuse 1 gelagert, wie aus Fig. 1 und Fig. 2, unterer Teil, ersichtlich ist. Der Übersetzungshebel 17 erstreckt sich von der in seinem oberen Endbereich befindlichen Anlenkung am Bolzen 18 schräg nach unten, in seinem mittleren Bereich ist er an von der Druckstange 6 auskragenden Querbolzen 19 drehbar gelagert, wie insbesondere aus dem oberen Teil der Fig. 2 ersichtlich ist. Die Bolzen 18 befinden sich in Richtung zur Öffnung 8 hin versetzt seitlich neben dem Stößel 5. Der Übersetzungshebel 17 ist an seiner dem Stößel 5 zugewandten Schmalseite jedes seiner Übersetzungseinzelhebel 17a und 17b mit einer Keilfläche 20 versehen. Die Keilfläche 20 beginnt im mittleren Bereich des Übersetzungshebels 17 etwa seitlich neben dem Querbolzen 19 und erstreckt sich bis zum freien Endbereich 21 des Übersetzungshebels 17. Die Ubersetzungseinzelhebel 17a und 17b greifen zwischen die Rollen 15 auf jedem Rollenlagerbolzen 14 ein, derart, daß die Rolle 16 auf der Keilfläche 20 abrollbar aufliegt. Das Gehäuse 1 ist in seinem unteren Abschnitt gegenüberliegend zur Öffnung 8 mit seitlich der Druckstange 6 befindlichen Vorsprüngen 22 versehen, welche vertikale, der Öffnung 8 zugewandte Abstützflächen 23 tragen. Die Keilfläche 20 nähert sich nach unten den Abstützflächen 23 an. Die Abstützflächen 23 sind auf an den Vorsprüngen auswechselbar befestigten, vertikal verlaufenden Leisten 24 angeordnet. Die Rollen 15 liegen abrollbar auf den Abstützflächen 23 an.

Unterhalb des Übersetzungshebels 17 ist im Gehäuse 1 mit einer Welle 25 drehbar ein Bremshebel 26 gelagert, dessen freies Ende 27 von seiten der Rolle 16 gegen den Endbereich 21 des Übersetzungshebels 17 drücken kann.

Bei im Lösezustand befindlicher Bremseinheit nehmen deren Teile die aus den Fig.1 und 2 ersichtlichen Lagen ein, wobei sich der Bremszylinderkolben 3 in seiner höchsten Stellung und die Achse der Rollenlagerbolzen 14 etwa in Höhe der Achse 7 befinden. Die Druckstange 6 befindet sich unter dem Einfluß einer nicht dargestellten Rückzugfeder in ihrer gemäß Fig.1 rechten Endlage.

Wird zum Bremsen der Bremszylinderkolben 3 durch einen Druckmittelanschluß 28 mit Druckmittel beaufschlagt, so bewegt er sich unter Mitnahme der Rollenlagerbolzen 14 und damit der Rollen 15 und 16 entgegen der Kraft der Kolbenrückdruckfeder 12 abwärts. Die Rollen 15 laufen dabei auf den Abstützflächen 23 und die Rollen 16 auf den Keilflächen 20 abwärts, der Übersetzungshebel 17 wird hierbei um den Bolzen 18 gemäß Fig.1 im Uhrzeigersinn gedreht und schiebt über den Querbolzen 19 die Druckstange 6 zum Bremsen gemäß Fig. 1 nach links. Die Druckstange 6 wird hierbei durch ihre Lagerungen am Übersetzungshebel 17 und am Pendelhebel 10 geführt, es können keinerlei Querkraftkomponenten oder Biegemomente in die Druckstange 6 eingeleitet werden. Während des Einbremsens läuft die Rolle 6 vom mittleren Bereich des Übersetzungshebels 17 zu dessen Endbereich 21 hin, wodurch die wirksamen Hebellängen des Übersetzungshebels 17 sich in Richtung eines größeren Übersetzungsverhältnisses ändern. Hierdurch wird erreicht, daß mit wachsendem Hub des Bremszylinderkolbens 3 und damit wachsender Kraftabgabe der Bremseinheit über das Auge 9 durch die Übersetzungsverhältnis-Änderung am Übersetzungshebel 17 die Belastung an den Rollen 15 und 16 und deren Lagerungen nicht im gleichen Maße, sondern geringer anwächst. Während des Bremsvorganges erfährt der Bremszylinderkolben 3 durch die Anlage der Rolle 15 an der Abstützfläche 23 eine gute Parallelführung, am Bremszylinderkolben 3 treten keine Querkräfte und keine Kippmomente auf.

Die maximale Bremsung ist erreicht, wenn sich die Rollen 15 und 16 in der in Fig. 1 strichpunktiert eingezeichneten, tiefen Lage befinden, wobei die Rolle 16 am nur strichpunktiert angedeuteten Endbereich 21 des Übersetzungshebels 17 anliegt.

Zum Lösen wird der Bremszylinder 2 entleert, die Kolbenrückdruckfeder 12 hebt den Bremszylinderkolben 3 in die in Fig.1 dargestellte Lage und die nicht gezeigte, bereits erwähnte Rückzugfeder schiebt die Druckstange 6 derart nach rechts, daß der Übersetzungshebel 17 mit seiner Keilfläche 20 in ständiger Anlage an der Rolle 16 verbleibt.

Beim Drehen des Bremshebels 26 mittels der Welle 25 drückt dessen Ende 27 gegen den Endbereich 21, wodurch der Übersetzungshebel 17 gemäß Fig.1 im Uhrzeigersinn um den Bolzen 18 gedreht wird und über den Querbolzen 29 die Druckstange 6 nach links zum Bremsen verschiebt.

Es ist hervorzuheben, daß während Bremsungen mit Ausnahme an der Dichtung des Bremszylinderkolbens 3 nur rollende Reibungen in der Bremseinheit auftreten, diese damit geringe Bewegungswiderstände und eine dementsprechend geringe Hysterese aufweist. Weiterhin ist hervorzuheben, daß am aus den Rollen 15,16, der Keilfläche 20 und der Stützfläche 23 gebildeten Keilgetriebe stets günstige Kraftumsetzungen von den Vertikalbewegungen des Bremszylinderkolbens 3 zu den im wesentlichen horizontal verlaufenden Bewegungen der Druckstange 6 erreichbar sind. Damit ist ein guter Wirkungsgrad für die Bremseinheit erreichbar.

Selbstverständlich ist es möglich, die Keilfäche 20 in bekannter Weise auszuformen, derart, daß sich zu Bremsbeginn ein rasches Bremsenanlegen bei geringer Hubbewegung des Bremszylinderkolbens 3 ergibt. Auch kann durch entsprechende Formgebung der Keilfläche 20 am Keilgetriebe selbst eine hubabhängige Übersetzungsänderung in gewünschter Weise erreicht werden, wie es aus dem Stand der Technik bekannt ist. Schließlich ist es ohne weiteres möglich, auf den Bremszylinder 2 noch einen Federspeicherzylinder aufzusatteln, der über einen Stößel mit dem Stößel 5 des Bremszylinders 2 zusammenwirken kann.

Selbstverständlich läßt sich die Erfindung auch bei Bremseinheiten anwenden, die als Bremskrafterzeuger anstelle des Bremszylinders 2 einen Federspeicherbremszylinder aufweisen, dessen Bremszylinderkolben auf den Stößel anstelle der Druck- eine Zugkraft ausübt. Die Anordnung von Lagerung und Keilfläche am Übersetzungshebel sind dann umzukehren, derart, daß sich zumindest ein nach dem Bremsenanlegen wirksamer Abschnitt der Keilflache einerseits der die Achse der Druckstange beinhaltenden Querebene zwischen dieser und dem Federspeicherbremszylinder und die Lagerung des Übersetzungshebels andererseits der Querebene befindet. Auch bei Ausfürungsformen, bei denen lediglich die vom Bremszylinder oder Federspeicherbremszylinder auf den Stößel ausübbare Kraft umgekehrt zu den vorstehend beschriebenen Ausführungsformen erfolgt, kann die Erfindung durch jeweils entsprechend umgekehrte Anordnung von Lagerung und Keilfläche am Übersetzungshebel verwirklicht werden.

**Patentansprüche**

1. Bremseinheit für Schienenfahrzeuge mit einem über ein Keilgetriebe mit einer Druckstange (6) gekoppelten Bremszylinder (2), wobei die Achsen (4, 7) von Druckstange (6) und Bremszylinder (2) wenigstens annähernd im rechten Winkel zueinander verlaufen und wobei das Keilgetriebe eine vom Bremszylinderkolben (3) bewegbare Rollenvorrichtung (15, 16) aufweist, die zwischen eine wenigstens annähernd parallel zur Achse (4) des Bremszylinders (2) verlaufende, gehäusefeste Abstützfläche (23) und eine an einem Übersetzungshebel (17) angeordnete Keilfläche (20) abrollbar eingreift, wobei der im wesentliche quer zur Druckstange (6) verlaufende Übersetzungshebel (17) in seinem mittleren Bereich an der Druckstange (6) angelenkt ist, ausgehend etwa von seinem mittleren Bereich bis in seinem einen Endbereich (21) die Keilfläche (20) trägt und nahe seines anderen Endbereiches am Gehäuse (1) der Bremseinheit schwenkbar gelagert ist, dadurch gekennzeichnet, daß sich zumindest ein nach dem Bremsenanlegen wirksamer Abschnitt der Keilfläche (20) auf der in Bewegungsrichtung des Bremszylinderkolbens (3) zum Einbremsen liegenden Seite einer die Achse (7) der Druckstange (6) beinhaltenden Querebene befindet und sich die Lagerung (18) des Übersetzungshebels (17) auf der anderen Seite dieser Querebene befindet.

2. Bremseinheit nach Anspruch 1, dadurch gekennzeichnet, daß der Bremszylinderkolben (3) einen gegabelt oder doppelt ausgeführten, die Druckstange (6) umgreifenden Stößel (5) trägt, dessen Enden Rollenlagerbolzen (14) tragen, daß der Übetsetzungshebel (17) gegabelt oder doppelt die Druckstange, (6) ebenfalls umgreifend ausgebildet ist, wobei sich beiderseits der Druckstange (6) je eine Keilfläche (20) befindet, daß sich beiderseits der Druckstange (6) je eine Absrützfläche (23) befindet, und daß auf jedem Rollenlagerbolzen (14) wenigstens zwei Rollen (15, 16) unabhängig voneinander drehbar gelagert sind, deren eine Rolle (15) auf einer der beiden Abstützflächen (23) und deren andere Rolle (16) auf einer der beiden Keilflächen (20) abrollbar ist.

3. Bremseinheit nach Anspruch 2, dadurch gekennzeichnet, daß die Stößelenden jeweils gegabelt ausgebildet sind, wobei sich zwischen den Gabelenden (13) zwei auf der Abstützfläche (23) abrollbare Rollen (16) und zwischen diesen eine auf der Keilfläche (20) abrollbare Rolle (15) befinden.

4. Bremseinheit nach Anspruch 2 oder 3, dadurch gekennzeichnet, daß sich die Abstützflächen (23) auf auswechselbar im Gehäuse (1) befestikten Leisten (24) befinden.

5. Bremseinheit nach Anspruch 3, dadurch gekennzeichnet, daß die mittlere Rolle (15) einen kleineren Durchmesser als die beiden seitlichen Rollen aufweist.

6. Bremseinheit nach einem oder mehrerenen der vorstehenden Ansprüche, gekennzeichnet durch einen nahe des freien Endes (Endbereich 21) des Übersetzungshebels (17) im Gehäuse (1) drehbar gelagerten Bremshebel (26), dessen freies Ende (27) von seiten det Rollenvorrichtung (15, 16) geken den Endbereich (21) des Übersetzungshebels (17) drückbar ist.

**Claims**

1. Brake unit for railway vehicles, comprising a brake cylinder (2) coupled to a thrust rod (6) through a wedge-type transmission, the axes (4, 7) of thrust rod (6) and brake cylinder (2) being at least approximately at right-angles to one another and the wedge-type transmission having a roller device (15, 16) movable by the brake cylinder piston (3), which roller device engages rollably between a fixed supporting surface (25) extending at least approximately parallel to the axis (4) of the brake cylinder (2) and a wedge surface (2a) arranged on a transmission lever (17), the transmission lever (17), which extends essentially crosswise to the thrust rod (6), being pivoted in its centre area on the thrust rod (6), carrying the wedge surface (20) extending roughly from its centre area to its end area (27) and being pivotably mounted close to its other end area on the body (1) of the brake unit, wherein there is at least one section (effective after brake application) of the wedge surface (20) located at that side of a transverse plane containing the axis (7) of the thrust rod (6), that lies in the direction of movement of the brake cylinder piston (3) for brake application, and wherein the mounting (18) for the transmission lever (17) is at the other side of this transverse plane.

2. Brake unit as defined in Claim 1, wherein the brake cylinder piston (3) carries a bifurcated or twin tappet (5) encompassing the thrust rod (6), the ends of which tappet carry roller bearing pins (14), wherein the transmission lever (17) is also of bifurcated or twin construction encompassing the thrust rod (6), there being one wedge surface (20) at either side of the thrust rod (6), wherein there is one supporting surface (23) at either side of the thrust rod (6), and wherein each roller bearing pin (14) carries at least two rollers (15,16) rotatable independently of each other, the roller (15) being able to roll on one of the two supporting surfaces (23) and the other roller (16) on one of the two wedge surfaces (20).

3. Brake unit as defined in Claim 2, wherein the tappet ends are both bifurcated, two rollers (76) rollable on the supporting surface (23) being located between the fork ends (13) and a roller (15) rollable on the wedge surface (20) being positioned between the said rollers (16).

4. Brake unit as defined in Claim 2 or 5, wherein the supporting surfaces (23) are located on strips (24) fastened exchangeably in the body (1).

5. Brake unit as defined in Claim 3, wherein the centre roller (15) is of smaller diameter than the two side rollers.

6. Brake unit as defined in one or more of the preceding Claims, comprising a brake lever (26) mounted rotatably in the body (1) close to the free end (end area 21) of the transmission lever (17), the free end (27) of the said brake lever (26) being capable of being pressed by the roller device (15, 16) against the end area (21) of the transmission lever (17).

**Revendications**

1. Unité de frein pour des véhicules sur rails, avec un cylindre de frein (2) accouplé à une tige de pression (6), par l'intermédiaire d'une transmission à clavette cunéiforme, les axes (4, 7) de la tige de pression (6) et du cylindre de frein (2) s'étendant au moins approximativement entre eux suivant un angle droit et la transmission à clavette cunéiforme comportant un dispositif à galets qui est mis en mouvement par le piston (3) du cylindre de frein et qui attaque, en roulant, entre une surface d'appui (23) solidaire du carter et s'étendant à peu près parallèlement à l'axe (4) du cylindre de frein (2) et une surface cunéiforme (20) ménagée sur le levier de transmission (17), celui-ci s'étendant transversalement à la tige de pression (6), étant articulé, dans sa partie médiane, à la tige de pression (6), portant la surface cunéiforme entre sa partie médiane jusqu'à environ sa partie d'extrémité (21) et étant articulé, près de son autre extrémité, sur un carter (1) de l'unité de freinage, caractérisée par le fait qu'au moins une section de la surface cunéiforme (20), qui devient active après l'application des freins, se situe sur le côté d'un plan transversal contenant l'axe (7) de la tige de pression (6), dans le sens du déplacement du piston (3) du cylindre de frein, alors que l'articulation (18) du levier de transmission (17) se situe sur l'autre côté de ce plan transversal.

2. Unité de frein selon la revendication 1, caractérisée par le fait que le piston (3) du cylindre de frein porte un poussoir (5) réalisé sous la forme d'une chape ou à deux éléments et entourant la tige de pression (6), et dont les extrémités portent des tourillons de paliers à rouleau (14), que le levier de transmission (17) est également réalisé à la manière d'une chape ou avec deux éléments, en entourant la tige de pression (6), alors que de part et d'autre de la tige de pression (6) est prévue une surface cunéiforme (20), que de part et d'autre de la tige de piston (6) est prévue respectivement une surface d'appui (23) et que sur chaque tourillon de paliers à rouleaux (14), sont prévus au moins deux galets (15, 16) qui sont montés de façon à pouvoir tourner indépendamment l'un de l'autre, l'un des galets (15) étant susceptible de rouler sur l'une des deux surfaces d'appui (23) alors que l'autre galet (16) est susceptible de rouler sur l'une des deux surfaces cunéiformes (20).

3. Unité de frein selon la revendication 2, caractérisée par le fait que les extrémités du poussoir sont chacune réalisées sous la forme d'une fourchette, alors qu'entre les extrémités de la fourchette (13) sont prévus deux galets (16) susceptibles de rouler sur la surface d'appui (23) et qu'entre lesdites extrémités est prévu un galet (15) qui est susceptible de rouler sur la surface cunéiforme (20).

4. Unité de frein selon la revendication 2 ou 3, caractérisée par le fait que les surfaces d'appui (23) se trouvent sur des baguettes qui sont fixées dans le carter de façon à pouvoir être remplacées.

5. Unité de frein selon la revendication 3, caractérisée par le fait que le galet médian (15) possède un diamètre qui est inférieur à celui des deux galets latéraux.

6. Unité de frein selon une ou plusieurs des revendications précédentes, caractérisée par un levier de frein (26) qui est monté, de façon à pouvoir tourner, dans le carter (1), près de l'extrémité libre (partie d'extrémité 21) du levier de transmission (17), l'extrémité libre (27) du levier de frein étant susceptible d'être appliquée, par le dispositif à galets (15, 16), contre la partie d'extrémité (21) du levier de transmission (17).

FIG.1

FIG. 2